Europäisches Patentamt

European Patent Office

Office européen des brevets

(19)

(11) Veröffentlichungsnummer: **0 034 215
B1**

(12)

# EUROPÄISCHE PATENTSCHRIFT

(45) Veröffentlichungstag der Patentschrift:
23.03.83

(21) Anmeldenummer: **80107774.4**

(22) Anmeldetag: **10.12.80**

(51) Int. Cl.³: **B 60 J 3/02**

(54) **Sonnenblende für Fahrzeuge.**

(30) Priorität: **16.02.80 DE 3005824**

(43) Veröffentlichungstag der Anmeldung:
**26.08.81 Patentblatt 81/34**

(45) Bekanntmachung des Hinweises auf die Patenterteilung:
**23.03.83 Patentblatt 83/12**

(84) Benannte Vertragsstaaten:
**DE FR GB IT SE**

(56) Entgegenhaltungen:
**DE-A-2 811 429
GB-A-1 245 677
US-A-2 264 601
US-A-2 288 481**

(73) Patentinhaber: **Gebr. Happich GmbH,
Postfach 10 02 49 Clausenbrücke 1,
D-5600 Wuppertal 1 (DE)**

(72) Erfinder: **Viertel, Lothar, V. Gartenreihe 48,
D-6630 Saarlouis (DE)**
Erfinder: **Kaiser, Peter, Sellscheid 42,
D-5632 Wermelskirchen (DE)**
Erfinder: **Cziptschirsch, Kurt, Am Heckendorn 43,
D-5600 Wuppertal 2 (DE)**

Sonnenblende für Fahrzeuge

Die Erfindung bezieht sich auf eine Sonnenblende für Fahrzeuge mit einem gepolsterten Sonnenblendenkörper, in dem ein Verstärkungsrahmen und ein an dem Verstärkungsrahmen befestigtes, eine Lagerachse aufnehmendes Drehlagergehäuse eingelagert ist.

Derartige Sonnenblenden sind seit vielen Jahren gebräuchlich, wobei zum Stand der Technik beispielsweise auf die Unterlagen des DE-U-1 841 742 hingewiesen wird. Die bekannten Sonnenblenden werden den Sicherheitsanforderungen, wie sie im Amtsblatt Nr. L 206/26 der Europäischen Gemeinschaften vom 29. 7. 1978 veröffentlicht worden sind, nicht mehr gerecht, so daß sie in Kürze nicht mehr in Fahrzeugen eingebaut werden dürfen, weil andernfalls die Zulassung der damit ausgerüsteten Fahrzeuge, die erstmals in Verkehr kommen, untersagt werden kann. Bei den Sonnenblenden der in Rede stehenden Art ist das im allgemeinen aus Stahlblech gebildete Drehlagergehäuse das kritische Teil, welches es begründen kann, daß die Sonnenblenden nicht den Bestimmungen der Richtlinie 74/60/EWG in der Fassung vom 19. 5. 1978 entsprechen. Denn das Drehlagergehäuse besitzt sowohl an den Stirnenden als auch am unteren Abschluß relativ scharfe Kanten, die bei einem Unfall, bei dem ein Fahrzeuginsasse mit dem Kopf gegen den Sonnenblendenkörper prallen kann, möglicherweise die Polsterung durchdringen und Verletzungen herbeiführen.

Es ist demgemäß Aufgabe der Erfindung, eine Sonnenblende der eingangs genannten Art in bezug auf die Sicherheitsvorschriften zu verbessern, insbesondere dafür Sorge zu tragen, daß das Drehlagergehäuse keine Verletzungsgefahr mehr begründen kann.

Der Erfindung zufolge wird diese Aufgabe durch ein das Drehlagergehäuse umschließendes, als Kunststoff-Spritzgußteil ausgebildetes Schutzgehäuse mit äußeren Abrundungsradien von mindestens 3,2 mm gelöst.

Durch die Erfindung wird das anstehende Problem in besonders einfacher und kostengünstiger Weise gelöst. Denn der konstruktive Aufbau der Sonnenblenden kann voll erhalten bleiben, so daß auch die vorhandenen Fertigungseinrichtungen, wie insbesondere Werkzeuge, die einen beträchtlichen Investitionswert darstellen, weiter benutzt werden können. Das Schutzgehäuse selber verursacht kaum ins Gewicht fallende Zusatzkosten, da es als Massenartikel relativ kostengünstig herzustellen ist, zumal der Materialeinsatz gering ist. Andererseits werden durch das Schutzgehäuse die Sicherheitsanforderungen voll erfüllt, da die scharfen Kanten des Drehlagergehäuses nun nicht mehr die Polsterung des Sonnenblendenkörpers durchdringen können.

Zweckmäßigerweise besitzt das Schutzgehäuse eine die Montage vereinfachende einteilige Ausbildung. Dabei kann es von Vorteil sein, daß das Schutzgehäuse aus zwei Hälften besteht, die über ein Filmscharnier miteinander verbunden und über angeformte Klipselemente unter Einschluß des Drehlagergehäuses aneinander festlegbar sind. Dadurch kann das Schutzgehäuse einen gestreckten Anlieferungszustand aufweisen und schnell und einfach montiert werden, indem es lediglich über das Drehlagergehäuse geklappt und zusammengedrückt wird, was ohne weiteres von Hand erfolgen kann.

In weiterer Ausgestaltung der Erfindung kann vorgesehen sein, daß der Öffnungsquerschnitt des Schutzgehäuses zumindest weitgehend der Außenkontur des Drehlagergehäuses angepaßt ist. Das Schutzgehäuse erhält dadurch einen wackelfreien Sitz und kann zufolge der inneren Abstützung durch das Drehlagergehäuse relativ dünnwandig ausgebildet werden. An Sonnenblenden durchgeführte Versuche haben gezeigt, daß die Sicherheitsanforderungen voll erfüllt sind, wenn das Drehlagergehäuse von einem Schutzgehäuse umschlossen ist, welches aus Polypropylen mit einer konstanten Wanddicke von etwa 1,2 mm besteht.

Im folgenden wird die Erfindung anhand eines in der Zeichnung dargestellten Ausführungsbeispieles näher erläutert. Es zeigt

Fig. 1 den Abschnitt eines Sonnenblendenkörpers im Drehlagerbereich,

Fig. 2 die Stirnansicht des das Drehlagergehäuse umschließenden Schutzgehäuses,

Fig. 3 den Schnitt III-III nach Fig. 2,

Fig. 4 den Schnitt IV-IV nach Fig. 3,

Fig. 5 den Schnitt V-V nach Fig. 3,

Fig. 6 den Schnitt VI-VI nach Fig. 3 und

Fig. 7 den Schnitt VII-VII nach Fig. 3.

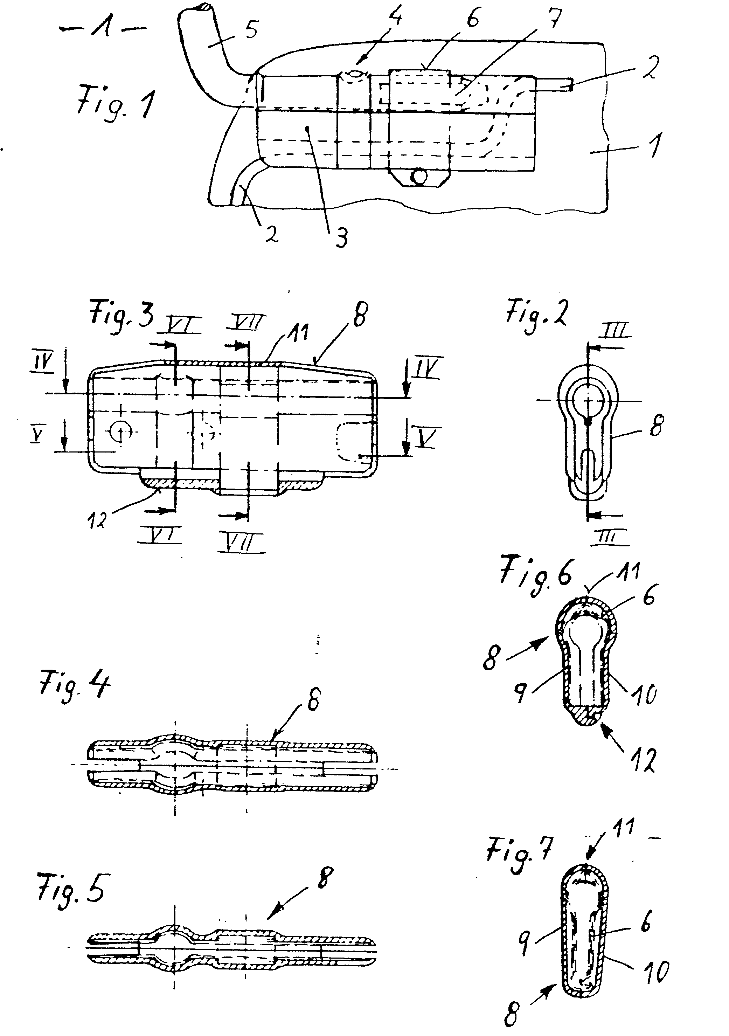

Fig. 1 zeigt bereichsweise einen Sonnenblendenkörper 1 mit einem darin eingelagerten, aus Draht gebildeten Verstärkungsrahmen 2 und mit einem Drehlagergehäuse 3, welches eine Lagerachse 5 lagert. Am Drehlagergehäuse 3 ist eine Sicherung 4 angeordnet, die ein Abziehen des Sonnenblendenkörpers 1 von der Lagerachse 5 verhindert. Ferner ist an dem Drehlagergehäuse 3 eine U-förmige Feder 6 angeordnet, die mit Abflachungen 7 an der Lagerachse 5 zusammenwirkt, um Raststellungen für den Sonnenblendenkörper 1 zu erzielen.

Das Drehlagergehäuse 3 ist aus einem Blechzuschnitt gebildet und im wesentlichen U-förmig ausgebildet. Mit seinen Schenkeln ist das Drehlagergehäuse 3 an dem Verstärkungsrahmen 2 festgelegt und nimmt zwischen den Schenkeln auch die Lagerachse 5 auf.

Das Drehlagergehäuse 3 ist vollständig von einem Schutzgehäuse 8 umschlossen, das auch die Sicherung 4 und die Feder 6 umgreift und damit praktisch das gesamte Drehlager umhüllt. Das Schutzgehäuse 8 ist als Kunststoff-Spritzgußteil ausgebildet und besitzt äußere Abrundungsradien von mindestens 3,2 mm. Das Schutzgehäuse 8 besteht, wie insbesondere aus Fig. 6 und 7 ersichtlich ist, aus zwei Hälften 9 und 10, die kopfendig über ein Filmscharnier 11 einstückig miteinander verbunden sind. Fußseitig sind an dem Schutzgehäuse 8 Klipselemente 12 angeformt, die die Hälften 9 und 10 aneinanderhalten, wenn sie gegeneinandergedrückt und die Klipselemente 12 dabei in Eingriff miteinander gebracht worden sind.

Bei der Fertigung wird das Schutzgehäuse 8 zweckmäßigerweise in gestreckter Form hergestellt. Es braucht dann bei der Montage lediglich über das Drehlagergehäuse 3 geklappt und zwecks Verrastung der Klipselemente zusammengedrückt zu werden.

Wie die Fig. 3 bis 7 zeigen, ist der Öffnungsquerschnitt des Schutzgehäuses 8 weitgehend der Außenkontur des Drehlagergehäuses 3 mit Sicherung 4 und Feder 6 angepaßt und es weist lediglich stirnseitige Aussparungen auf, die zum Durchlaß der Lagerachse 5 und des Drahtes des Verstärkungsrahmens 2 dienen. In den Fig. 3 bis 7 ist die Lage des Drehlagergehäuses 3 nebst der damit verbundenen Teile innerhalb des Schutzgehäuses 8 strichpunktiert angedeutet.

## Patentansprüche

1. Sonnenblende für Fahrzeuge mit einem gepolsterten Sonnenblendenkörper (1), in dem ein Verstärkungsrahmen (2) und ein an dem Verstärkungsrahmen (2) befestigtes, eine Lagerachse (5) aufnehmendes Drehlagergehäuse (3) eingelagert ist, gekennzeichnet durch ein das Drehlagergehäuse (3) umschließendes, als Kunststoff-Spritzgußteil ausgebildetes Schutzgehäuse (8) mit äußeren Abrundungsradien von mindestens 3,2 mm.

2. Sonnenblende nach Patentanspruch 1, gekennzeichnet durch eine einteilige Ausbildung des Schutzgehäuses (8).

3. Sonnenblende nach Patentanspruch 1 oder 2, dadurch gekennzeichnet, daß das Schutzgehäuse (8) aus zwei Hälften (9, 10) besteht, die über ein Filmscharnier (11) miteinander verbunden und über angeformte Klipselemente (12) unter Einschluß des Drehlagergehäuses (3) aneinander festlegbar sind.

4. Sonnenblende nach einem oder mehreren der Patentansprüche 1 bis 3, dadurch gekennzeichnet, daß der Öffnungsquerschnitt des Schutzgehäuses (8) zumindest weitgehend der Außenkontur des Drehlagergehäuses (3) angepaßt ist.

## Claims

1. A sun visor for a vehicle, the visor comprising a padded sun visor body (1) embedding a reinforcing structure (2) and fastened thereto a swivel bearing (3) housing a bearing shaft (5), characterized by a protective casing (8) which is injection moulded of a plastics material, which encloses the swivel bearing (3) and which is externally rounded off, the external radii of curvature being at least 3.2 mm.

2. A sun visor according to claim 1, characterized in that the protective casing (8) is a one-piece component.

3. A sun visor according to claim 1 or claim 2, characterized in that the protective casing (8) consists of two halves integrally connected to one another by a hinge (11) formed of a thickness-reduced section of the moulding, and in that the two halves are fastenable to each other around the swivel bearing (3) by means of integrally moulded clip-in elements (12).

4. A sun visor according to any one or more of the claims 1 to 3, characterized in that the profile of the aperture of the casing (8) conforms at least substantially with the external contour of the swivel bearing (3).

## Revendications

1. Pare-soleil pour véhicules automobiles, comprenant un corps (1) rembourré, dans lequel est incorporé un cadre de renfort (2) et un logement de support rotatif (3) fixé au cadre de renfort (2) et recevant un axe de support (5), caractérisé en ce qu'il comprend un boîtier protecteur (8) entourant le logement du support rotatif (3) et constitué sous forme d'une pièce en matière plastique moulée par injection et dont le rayon des arrondis externes est d'au moins 3,2 mm.

2. Pare-soleil selon la revendication 1, caractérisé en ce que le boîtier protecteur (8) est réalisé en une seule pièce.

3. Pare-soleil selon la revendication 1 ou 2, caractérisé en ce que le boîtier protecteur (8) comprend deux moitiés (9, 10) reliées l'une à l'autre par l'intermédiaire d'une bande de matériau formant charnière (11) et qui peuvent être fixées l'une à l'autre, après insertion du logement du support rotatif (3), par l'intermédiaire d'éléments d'enclenchement formés sur lui.

4. Pare-soleil selon l'une ou plusieurs des revendications 1 à 3, caractérisé en ce que la section transversale de l'ouverture du boîtier protecteur (8) correspond dans une large mesure au moins au contour externe du logement du support rotatif (3).

0 034 215

—1—

Fig. 1

Fig. 3

Fig. 2

Fig. 6

Fig. 4

Fig. 5

Fig. 7

5